(19) Europäisches Patentamt
European Patent Office
Office européen des brevets

(11) EP 3 879 416 A1

(12) EUROPEAN PATENT APPLICATION
published in accordance with Art. 153(4) EPC

(43) Date of publication:
15.09.2021 Bulletin 2021/37

(51) Int Cl.:
$G06F\ 16/9537$ (2019.01)

(21) Application number: 20894917.2

(22) Date of filing: 21.09.2020

(86) International application number:
PCT/CN2020/116632

(87) International publication number:
WO 2021/139209 (15.07.2021 Gazette 2021/28)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 06.01.2020 CN 202010010479

(71) Applicant: Baidu Online Network Technology
(Beijing) Co., Ltd
Beijing 100085 (CN)

(72) Inventors:
• LI, Ying
Beijing 100085 (CN)

• HUANG, Jizhou
Beijing 100085 (CN)
• FAN, Miao
Beijing 100085 (CN)
• WANG, Haifeng
Beijing 100085 (CN)

(74) Representative: dompatent von Kreisler Selting
Werner -
Partnerschaft von Patent- und Rechtsanwälten
mbB
Deichmannhaus am Dom
Bahnhofsvorplatz 1
50667 Köln (DE)

(54) QUERY AUTO-COMPLETION METHOD, APPARATUS AND DEVICE, AND COMPUTER STORAGE MEDIUM

(57) The present application discloses a query auto-completion method and apparatus, a device and a computer storage medium, which relates to the technical field of intelligent search. An implementation includes: acquiring a query prefix input by a user currently, and determining candidate POIs corresponding to the query prefix; acquiring vector representation of query history information of the user and vector representation of each candidate POI; inputting the vector representation of the query history information of the user and the vector representation of each candidate POI into a pre-trained ranking model, so as to obtain a score of each candidate POI; and determining query completion suggestions recommended to the user according to the scores of respective candidate POIs. With the present application, the recommended query completion suggestions may better meet practical requirements of the user.

Fig.3

**Description**

The present application claims priority to Chinese Patent Application No.2020100104792, entitled "Query Auto-Completion Method and Apparatus, Device and Computer Storage Medium", filed on January 06, 2020.

**Field of the Disclosure**

The present application relates to the technical field of computer applications, and particularly to a query auto-completion method and apparatus, a device and a computer storage medium in the technical field of intelligent search.

**Background of the Disclosure**

Currently, Query Auto-Completion (QAC) is widely used by mainstream general search engines and vertical search engines. For example, in a map application, when a user inputs a query to search for a certain Point of Interest (POI), starting from the user inputting an incomplete query (which is referred to as a query prefix in the present application), a search engine may recommend a series of candidate POIs to the user in real time in a candidate list for the user to select as a completion result of the query (queries recommended in the candidate list are referred to as query completion suggestions in the present application). Once the user finds an intended POI in the candidate list, the query may be completed by selecting this POI from the candidate list, thereby initiating a search for this POI.

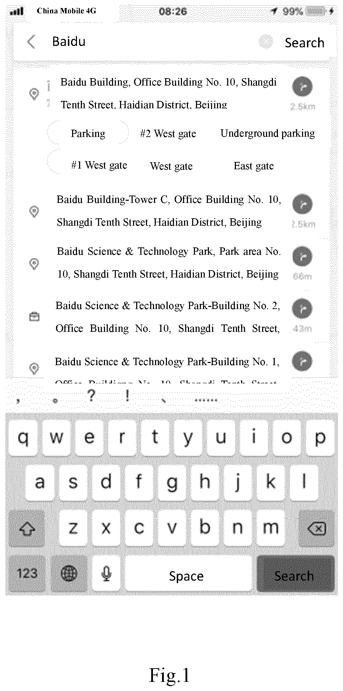

For example, as shown in Fig. 1, when the user inputs a query prefix "Baidu" in a search box of the map application, candidate POIs, such as "Baidu Building", "Baidu Building-Tower C", "Baidu Science & Technology Park", or the like, may be recommended to the user in the form of a candidate list for the user to select, and once the user selects "Baidu Building" therefrom, the query is completed, and a search for "Baidu Building" is initiated.

However, in the existing query auto-completion scheme, the suggestions provided for the same query prefixes are all the same, for example, all the suggestions are ranked in the candidate list based on the search popularity of each POI, and personalized requirements of the user are unable to be well met.

**Summary of the Disclosure**

In view of this, the present application provides a query auto-completion method and apparatus, a device and a computer storage medium, such that recommended query completion suggestions better meet practical requirements of a user.

In a first aspect, the present application provides a query auto-completion method, including:

acquiring a query prefix input by a user currently, and determining candidate Points of Interest (POIs) corresponding to the query prefix;
acquiring vector representation of query history information of the user and vector representation of each candidate POI;
inputting the vector representation of the query history information of the user and the vector representation of each candidate POI into a pre-trained ranking model, so as to obtain a score of each candidate POI; and
determining query completion suggestions recommended to the user according to the scores of respective candidate POIs.

According to a preferred implementation of the present application, the acquiring vector representation of query history information of the user includes:

acquiring the query history information of the user, the query history information including POIs queried or clicked by the user in first duration and high-frequency POIs queried or clicked by the user in second duration, and the second duration being longer than the first duration; and
acquiring the vector representation of the query history information of the user using vector representation of the POIs.

According to a preferred implementation of the present application, the vector representation of each POI is pre-obtained by:

acquiring POI query logs of mass users, and arranging the POIs queried or clicked by the users according to a time sequence respectively to obtain POI sequences;
slicing each POI sequence according to the size of a preset sliding window, each slice including a central POI and contextual POIs of the central POI;

training a skip-gram model using each slice; and
after the training operation is finished, obtaining the vector representation of each POI from the skip-gram model.

According to a preferred implementation of the present application, the training a skip-gram model using each slice includes:
encoding attribute information of each POI using the skip-gram model to obtain the vector representation of each POI, predicting the vector representation of the contextual POIs in each slice using the vector representation of the central POI in the same slice, and iteratively updating model parameters of the skip-gram model according to an error of the prediction result.

According to a preferred implementation of the present application, the encoding attribute information of each POI includes:

encoding name and address information of the POI by a convolutional neural network;
encoding other attribute information of the POI by a feedforward neural network; and
splicing the encoding results of the same POI, and then mapping the splicing result by a fully connected layer to obtain the vector representation of the POI.

According to a preferred implementation of the present application, vector representation of attribute features of the user and vector representation of popularity features of each candidate POI are further used when each candidate POI is scored by the ranking model.

In a second aspect, the present application provides a method for building a ranking model for query auto-completion, including:

acquiring, from a POI query log, user identification, a query prefix input when a user selects a POI from query completion suggestions, POIs in the query completion suggestions corresponding to the query prefix and the POI selected by the user in the query completion suggestions;
acquiring vector representation of query history information of the user before the query prefix is input and vector representation of each POI in the query completion suggestions; and
training a neural network model by taking the vector representation of the query history information of the user before the query prefix is input and the vector representation of the POI selected by the user in the corresponding query completion suggestions as a positive example and the vector representation of the query history information of the user before the query prefix is input and the POIs not selected by the user in the corresponding query completion suggestions as negative examples, so as to obtain the ranking model, with a training target of maximizing the difference between scores of the positive and negative example POIs by the neural network model.

According to a preferred implementation of the present application, the acquiring vector representation of query history information of the user before the query prefix is input includes:

acquiring the query history information of the user before the query prefix is input, the query history information including POIs queried or clicked by the user in first duration before the query prefix is input and high-frequency POIs queried or clicked in second duration, and the second duration being longer than the first duration; and
acquiring the vector representation of the query history information of the user before the query prefix is input using vector representation of the POIs.

According to a preferred implementation of the present application, the vector representation of each POI is pre-obtained by:

acquiring POI query logs of mass users, and arranging the POIs queried or clicked by the users according to a time sequence respectively to obtain POI sequences;
slicing each POI sequence according to the size of a preset sliding window, each slice including a central POI and contextual POIs of the central POI;
training a skip-gram model using each slice; and
after the training operation is finished, obtaining the vector representation of each POI from the skip-gram model.

According to a preferred implementation of the present application, the training a skip-gram model using each slice includes:
encoding attribute information of each POI using the skip-gram model to obtain the vector representation of each POI, predicting the vector representation of the contextual POIs in each slice using the vector representation of the central POI in the same slice, and iteratively updating model parameters of the skip-gram model according to an error of the prediction result.

According to a preferred implementation of the present application, the positive example further includes vector representation of attribute features of the user and vector representation of popularity features of the POI selected by the user; and

the negative example further includes the vector representation of the attribute features of the user and vector representation of popularity features of the POIs not selected by the user.

In a third aspect, the present application further provides a query auto-completion apparatus, including:

a first acquiring unit configured to acquire a query prefix input by a user currently, and determine candidate POIs corresponding to the query prefix;

a second acquiring unit configured to acquire vector representation of query history information of the user and vector representation of each candidate POI;

a scoring unit configured to input the vector representation of the query history information of the user and the vector representation of each candidate POI into a pre-trained ranking model, so as to obtain a score of each candidate POI; and

a query completion unit configured to determine query completion suggestions recommended to the user according to the scores of respective candidate POI.

In a fourth aspect, the present application provides an apparatus for building a ranking model for query auto-completion, including:

a first acquiring unit configured to acquire, from a POI query log, user identification, a query prefix input when a user selects a POI from query completion suggestions, POIs in the query completion suggestions corresponding to the query prefix and the POI selected by the user in the query completion suggestions;

a second acquiring unit configured to acquire vector representation of query history information of the user before the query prefix is input and vector representation of each POI in the query completion suggestions; and

a model training unit configured to train a neural network model by taking the vector representation of the query history information of the user before the query prefix is input and the vector representation of the POI selected by the user in the corresponding query completion suggestions as a positive example and the vector representation of the query history information of the user before the query prefix is input and the POIs not selected by the user in the corresponding query completion suggestions as negative examples, so as to obtain the ranking model, with a training target of maximizing the difference between scores of the positive and negative example POIs by the neural network model.

In a fifth aspect, the present application provides an electronic device, including:

at least one processor;

a memory connected with the at least one processor communicatively;

wherein the memory stores instructions executable by the at least one processor to enable the at least one processor to perform the method as mentioned above.

In a sixth aspect, the present application provides a non-transitory computer readable storage medium with computer instructions stored thereon, wherein the computer instructions are used for causing a computer to perform the methods as mentioned above.

According to the technical solution in the present application, in query automatic completion of the POI, the query history information of the user is merged into the ranking model to rank the candidate POIs, such that the query completion suggestions recommended to the user are more in line with search preference of the user.

Other effects of the above-mentioned alternatives will be described below in conjunction with embodiments.

**Brief Description of Drawings**

The drawings are used for better understanding the present solution and do not constitute a limitation of the present application. In the drawings:

Fig. 1 is an exemplary diagram of a query auto-completion interface;
Fig. 2 shows an exemplary system architecture to which embodiments of the present disclosure may be applied;
Fig. 3 is a flow chart of a query auto-completion method according to a first embodiment of the present application;

Fig. 4 is a flow chart of a method for acquiring POI vector representation according to the first embodiment of the present application;

Fig. 5 is a schematic processing diagram of the method according to the embodiment of the present application;

Fig. 6 is a flow chart of a method for building a ranking model according to a second embodiment of the present application;

Fig. 7 is a structural diagram of a query auto-completion apparatus according to a third embodiment of the present application;

Fig. 8 is a structural diagram of an apparatus for building a ranking model according to an embodiment of the present application;

Fig. 9 is a block diagram of an electronic device configured to implement the methods according to the embodiments of the present application.

## Detailed Description of Preferred Embodiments

The following part will illustrate exemplary embodiments of the present application with reference to the drawings, including various details of the embodiments of the present application for a better understanding. The embodiments should be regarded only as exemplary ones. Therefore, those skilled in the art should appreciate that various changes or modifications can be made with respect to the embodiments described herein without departing from the scope and spirit of the present application. Similarly, for clarity and conciseness, the descriptions of the known functions and structures are omitted in the descriptions below.

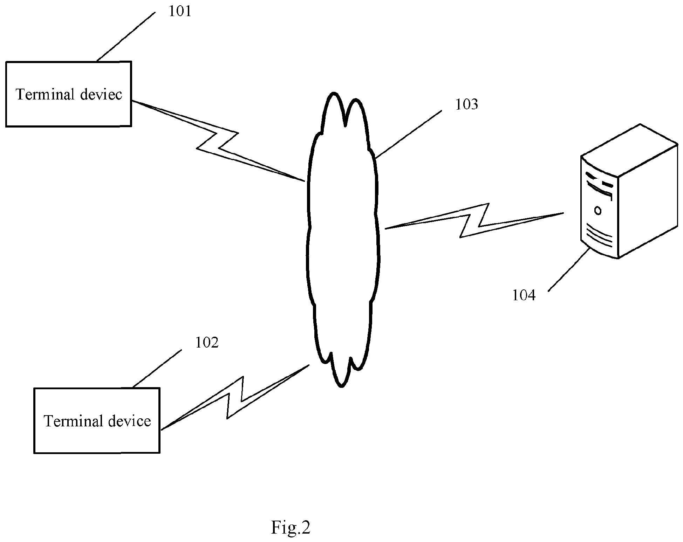

Fig. 2 shows an exemplary system architecture to which the embodiment of the present disclosure may be applied. As shown in Fig. 2, the system architecture may include terminal devices 101, 102, a network 103 and a server 104. The network 103 serves as a medium for providing communication links between the terminal devices 101, 102 and the server 104. The network 103 may include various connection types, such as wired and wireless communication links, or fiber-optic cables, or the like.

Users may use the terminal devices 101, 102 to interact with the server 104 through the network 103. Various applications, such as a voice interaction application, a web browser application, a communication application, or the like, may be installed on the terminal devices 101, 102.

The terminal devices 101, 102 may be configured as various electronic devices, including, but not limited to, smart phones, PCs, smart televisions, or the like. A query auto-completion apparatus according to the present disclosure may be provided and run on the server 104. The apparatus may be implemented as a plurality of pieces of software or software modules (for example, for providing distributed service), or a single piece of software or software module, which is not limited specifically herein.

For example, when a user inputs a query prefix on a retrieval interface provided by a browser or a client on the terminal device 101, the browser or the client provides the query prefix to the server 104 in real time, and the server returns query completion suggestions corresponding to the query prefix currently input by the user to the terminal device 101 with a method according to the present application. If the user finds a wanted POI from the query completion suggestions, a search for this POI may be initiated by selecting the POI. If the user does not find the wanted POI from the query completion suggestions, an input operation may continue, the browser or the client then provides the query prefix for the server 104 in real time, and the server 104 returns the query completion suggestions corresponding to the query prefix input by the user, thereby achieving an effect that in the process of inputting a query by the user, the query completion suggestions are recommended to the user in real time along with the query prefix input by the user.

The server 104 may be configured as a single server or a server group including a plurality of servers. It should be understood that the numbers of the terminal devices, the network, and the server in Fig. 2 are merely schematic. There may be any number of terminal devices, networks and servers as desired for an implementation.

The technical essence of the present application lies in establishing the association between the user and the POI, and may have a use scenario that when the user uses map data to search for the POI, the query completion suggestions are recommended to the user in real time along with the query prefix input by the user. The query completion suggestions are obtained by ranking candidate POIs with a ranking model after determination of the candidate POIs corresponding to the query prefix input by the user.

In the prior art, the ranking operation for each candidate POI usually takes into account popularity features of each candidate POI, and in some cases, also takes into account some user attribute features. However, this ranking way is unable to meet actual demands of the user well. By statistics using data of real POI retrieval of users in large-scale map data, a large number of users are found to repeatedly search the same POI. For example, about 20% of users will repeatedly search the same POI within 7 days. Based on the this, the present application has a core concept that personalized query history information of the users is taken as unique features of the users to be merged into the ranking model, such that the situation that the users repeatedly search the same POI may be captured quickly, and search intentions of the users may be completed more quickly. Methods according to the present application will be described below in detail in conjunction with embodiments.

First Embodiment

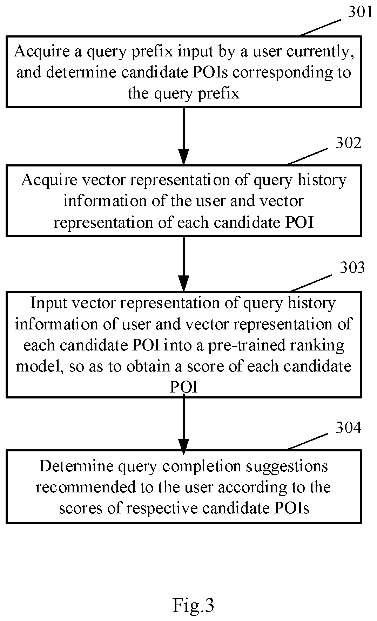

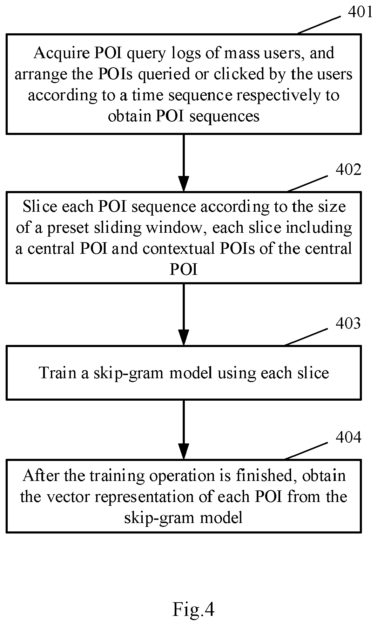

Fig. 3 is a flow chart of a query completion method according to a first embodiment of the present application, and as shown in Fig. 3, the method may include the following steps:
301: acquiring a query prefix input by a user currently, and determining candidate POIs corresponding to the query prefix.
The method is suitable for various types of input contents, such as Chinese characters, pinyin, initials, or the like, but the input query prefix may be regarded as a character string. As the user inputs the query prefix, the query prefix input by the user currently is acquired in real time. For example, in the process of inputting "Baidu Building" by the user, the user may input a plurality of query prefixes, such as "Bai", "Baidu" and "Baidu Build", and the method according to the present application is executed for each query prefix. That is, when the user inputs "Bai", the currently input query prefix is "Bai", and the method according to the present application is executed for the query prefix to recommend query completion suggestions to the user. When the user inputs "Baidu", the currently input query prefix is "Baidu", and the method according to the present application is executed for the query prefix to recommend query completion suggestions to the user. When the user inputs "Baidu Build", the currently input query prefix is "Baidu Build", and the method according to the present application is executed for the query prefix to recommend query completion suggestions to the user.
The manner for determining the candidate POIs corresponding to the currently input query prefix may adopt an existing implementation manner, and aims to find POIs strongly related to the query prefix, or find POIs with the query prefix as the beginning of texts. For example, a reverse index may be established in advance for POIs in a POI library with various corresponding query prefixes. When the user inputs a query, the POI library is queried according to the query prefix input currently, and all hit POIs serve as the candidate POIs.
302: acquiring vector representation of query history information of the user and vector representation of each candidate POI.
When the vector representation of query history of the user is acquired, the query history information of the user may be obtained first, and then, the vector representation of the query history information of the user may be obtained using the vector representation of the POI.
Specifically, the query history information of the user includes POIs queried or clicked by the user in first duration and high-frequency POIs queried or clicked by the user in second duration, and the second duration is longer than the first duration.
The POIs queried or clicked by the user in the first duration may be regarded as short-term query history of the user. The short-term query history may include preceding user behaviors in the same search session as the currently input query prefix, for example, POIs queried and clicked before the currently input query prefix in the same session. The short-term search history may be viewed as contextual information of a current query (the query prefix), which reflects short-term instantaneous interest of the user.
The above-mentioned "session" refers to a search session, and a widely adopted determination method of a search session may be used here. If the user does not have any search behavior before the first duration (for example, 30 minutes), the first search behavior within the first duration may be referred to as the beginning of the session. That is, if the user has consecutive search behaviors within 30 minutes, the consecutive search behaviors within 30 minutes all belong to the same session.
The POIs queried or clicked by the user in the second duration may be regarded as long-term query history of the user. The long-term query history refers to all search behaviors of the user in second duration before the currently input query (the query prefix), and includes queried or clicked high-frequency POIs in all sessions of the user in the second duration. The high-frequency POIs may have query or click numbers exceeding a preset threshold. The long-term query history reflects long-term intrinsic interest preference of the user.
In the present application, the above-mentioned first duration may be in the order of minutes or hours, for example, 30 minutes. The above-mentioned second duration may be in the order of days or months, for example, 3 months.
In the embodiment of the present application, the vector representation of each POI may be acquired in advance. The vector representation of the POI is assumed to be k-dimensional, k being a positive integer greater than 1. When the user queries or clicks m POIs in the first duration and n high-frequency POIs in the second duration, the (m+n) POIs are represented using the vector representation of the POIs, and then, a $(m+n) \times k$-dimensional vector matrix may be obtained as the vector representation of the query history information of the user.
A method for acquiring the vector representation of the POIs in advance is described in detail below. The vector representation of the POIs here is vector representation of a text meaning, and the acquiring method thereof may be shown in Fig. 4, and includes the following steps:
401: acquiring POI query logs of mass users, and arranging the POIs queried or clicked by the users according to a time sequence respectively to obtain POI sequences.

From the POI query logs of the mass users, the time sequences of the POIs queried or clicked successively by the users are summarized according to the users, for example:

    user_A: POI_ID_1, POI_ID_2, POI_ID_3, ...
    user_B: POI_ID_2, POI_ID_6, POI_ID_7, POI_ID_8, ...

402: slicing each POI sequence according to the size of a preset sliding window, each slice including a central POI and contextual POIs of the central POI.

For example, if the size of the sliding window is 3, each POI sequence may be sliced into the slices each composed of at most 3 POIs, for example, after the POI timing sequence corresponding to the user_B is sliced, the following slices may be obtained: [POI_ID_2, POI_ID_6, POI_ID_7], [POI_ID_6, POI_ID_7, POI_ID_8], or the like.

The central POI and the contextual POIs of the central POI may be included in each slice. The central POI is a POI not located at two ends of the slice, and the contextual POIs of the central POI may be other POIs than the central POI in the slice or POIs adjacent to the central POI in the slice.

403: training a skip-gram model using each slice.

The skip-gram model is a model used in the natural language processing field for predicting contextual words corresponding to a given key word. In the present application, the skip-gram model is referred to and used for acquiring the vector representation of each POI.

Specifically, attribute information of each POI may be encoded using the skip-gram model to obtain the vector representation of each POI, the vector representation of the contextual POIs in each slice is predicted using the vector representation of the central POI in the same slice, and model parameters of the skip-gram model are iteratively updated according to an error of the prediction result.

When the attribute information of each POI is encoded, the involved attribute information may include, but not limited to, the identification, name, category, address, tag, etc. of the POI. Name and address information of the POI may be encoded by a convolutional neural network, and other attribute information of the POI may be encoded by a feedforward neural network. Then, a vector obtained after the encoding results of the same POI are spliced is mapped by a fully connected layer to obtain the vector representation of the POI.

After the model parameters of the skip-gram model are updated iteratively, if the error of the prediction result meets a preset requirement, or the iteration number reaches a preset threshold, or other conditions for finishing the training operation are met, the training operation of the skip-gram model is ended.

404: after the training operation is finished, obtaining the vector representation of each POI from the skip-gram model.

With continued reference to Fig. 3, 303: inputting the vector representation of the query history information of the user and the vector representation of each candidate POI into a pre-trained ranking model, so as to obtain a score of each candidate POI.

Vector representation of attribute features of the user and vector representation of popularity features of each candidate POI are further used when each candidate POI is scored by the ranking model. That is, input to the ranking model includes the vector representation of the query history information of the user, the vector representation of each candidate POI, the vector representation of the attribute features of the user and the vector representation of the popularity features of each candidate POI, and output of the ranking model is the score for each candidate POI. The ranking model may be configured as a neural network model, and the training process thereof will be described in detail in the second embodiment.

The attribute features of the user may include information, such as the user's age, gender, job, income level, city, etc., and the vector representation of the attribute features of the user may be obtained by encoding the information. The popularity features of the candidate POI may be characterized by information, such as click frequency, retrieval frequency, navigation frequency, or the like, of the candidate POI, and the vector representation of the popularity features of the candidate POI may be obtained by encoding the information. Specifically, encoding methods are not repeated and may adopt the prior art.

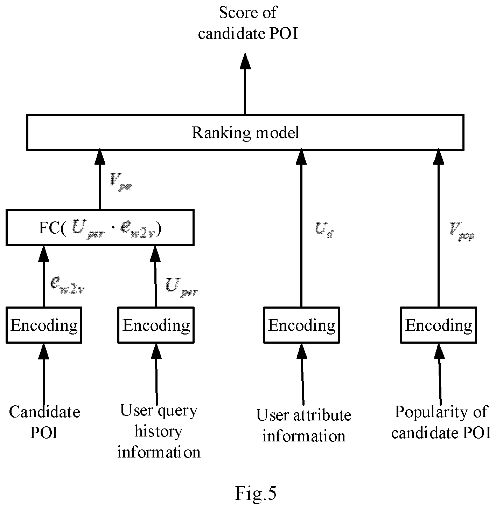

In the embodiment of the present application, $e_{w2v}$ is taken as the vector representation of the POI, $U_{per}$ is taken as a vector table of the query history information of the user, $U_d$ is taken as the vector representation of the attribute feature of the user, $V_{pop}$ is taken as the vector representation of the popularity feature of the candidate POI, and the above-mentioned whole process may be shown in Fig. 5.

As an implementation, (m+n)×k-dimensional $U_{per}$ and k-dimensional $e_{w2v}$ may be multiplied to obtain a (m+n)-dimensional similarity feature matrix $V_{per}$:

$$V_{per} = U_{per}^T e_{w2v}$$

Then, $V_{per}$, $U_d$ and $V_{pop}$ are input into the ranking model, and in the ranking model, $V_{per}$, $U_d$ and $V_{pop}$ may spliced into a new feature vector which is converted into the score of the candidate POI by the neural network.

304: determining query completion suggestions recommended to the user according to the scores of respective candidate POIs.

In this step, the candidate POIs with score values greater than or equal to a preset score threshold may be used as the query completion suggestions, or the POIs with top P score values may be used as the query completion suggestions, and so on, and P is a preset positive integer. When the query completion suggestions are recommended to the user, the POIs are ranked in a candidate list according to the scores thereof. An existing drop-down box near the search box or other forms may be adopted as the recommendation way.

With the present embodiment, the query history information of the user is merged into the ranking model to rank the candidate POIs, such that the query completion suggestions recommended to the user are more in line with search preference of the user. For example, since one user works in the "Baidu Building", the user often searches the POI "Baidu Building" to perform navigation, a road condition query, or the like, but in the prior art, POIs are ranked according to search popularity thereof. Unless a large number of users would like to click or search the POI "Baidu Building", "Baidu Building" would not rank higher in the query completion suggestions. With the embodiment of the present application, when the user inputs a query prefix, such as "ba", or the like, since the user frequently searches "Baidu Building", "Baidu Building" is ranked higher in the query completion suggestions provided by the user, thereby rapidly satisfying the search preference of the user.

Second Embodiment

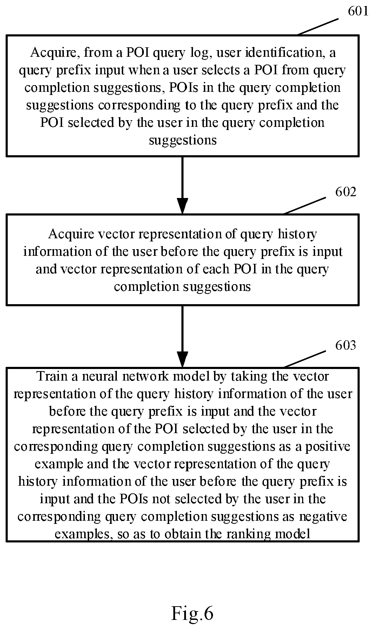

Fig. 6 is a flow chart of a method for building a ranking model according to a second embodiment of the present application, and as shown in Fig. 6, the method may include the following steps:
601: acquiring, from a POI query log, user identification, a query prefix input when a user selects a POI from query completion suggestions, POIs in the query completion suggestions corresponding to the query prefix and the POI selected by the user in the query completion suggestions.

For example, in the process of inputting characters one by one to form the query prefixes, when inputting "Baidu Build", the user user_A clicks the POI "Baidu Building A tower" from the query completion suggestions, user identification user_A, the query prefix "Baidu Build", each POI in the corresponding query completion suggestions, and the POI "Baidu Building-Tower A" selected by the user are acquired as one piece of data. In the same way, a plurality of pieces of data may be obtained from POI query logs of mass users for training the ranking model.

602: acquiring vector representation of query history information of the user before the query prefix is input and vector representation of each POI in the query completion suggestions.

In this step, the query history information of the user before the query prefix is input may be acquired, the query history information may include POIs queried or clicked by the user in first duration before the query prefix is input and high-frequency POIs queried or clicked in second duration, and the second duration is longer than the first duration; and then, the vector representation of the query history information of the user before the query prefix is input may be obtained using the vector representation of the POI.

The implementation of this step is similar to that of the step 302 in the first embodiment, and for the vector representation of the POI, reference may be made to the implementation of the step 302 in the first embodiment, which is not repeated herein.

603: training a neural network model by taking the vector representation of the query history information of the user before the query prefix is input and the vector representation of the POI selected by the user in the corresponding query completion suggestions as a positive example and the vector representation of the query history information of the user before the query prefix is input and the POIs not selected by the user in the corresponding query completion suggestions as negative examples, so as to obtain the ranking model.

The ranking model may be trained pairwise. Further, the above-mentioned positive example may further include vector representation of attribute features of the user and vector representation of popularity features of the POI selected by the user; and the negative example further includes the vector representation of the attribute features of the user and vector representation of popularity features of the POIs not selected by the user.

The processing process is similar to Fig. 5. That is, the positive example includes: the vector representation (corresponding to $U_{per}$ in Fig. 5) of the query history information of the user before the query prefix is input, the vector representation (corresponding to $e_{w2v}$ in Fig. 5) of the POI selected by the user in the corresponding query completion suggestions, the vector representation (corresponding to $U_d$ in Fig. 5) of the attribute features of the user, the vector representation (corresponding to $V_{pop}$ in Fig. 5) of the popularity features of the POI selected by the user, and $U_{per}$ and $e_{w2v}$ may be multiplied to obtain the similarity feature matrix $V_{per}$. The negative example includes: the vector representation (corresponding to $U_{per}$ in Fig. 5) of the query history information of the user before the query prefix is input, the vector representation (corresponding to $e_{w2v}$ in Fig. 5) of the POI not selected by the user in the corresponding query completion suggestions, the vector representation (corresponding to $U_d$ in Fig. 5) of the attribute features of the user, the vector representation (corresponding to $V_{pop}$ in Fig. 5) of the popularity features of the POI not selected by the user, and $U_{per}$ and $e_{w2v}$ may be multiplied to obtain the similarity feature matrix $j \neq k^{(i)}$

The input vector representation is spliced and transformed by the ranking model to obtain the scores of the positive and negative example POIs, and parameters of the ranking model are updated according to the obtained scores of the positive and negative example POIs until a training target is reached. The training target may be to maximize the difference between the scores of the positive and negative example POIs by the neural network model.

Specifically, the above-mentioned training target may be embodied as minimizing the loss $L_\Delta$ of the neural network model, for example, the following formula may be adopted:

$$L_\Delta = \sum_{i=1}^{m} \sum_{j=1}^{n} (\max\{0, \ \tau + h(u^{(i)}, v^{(i,k^{(i)})}) - h(u^{(i)}, v^{(i,j)})\})^2$$

wherein $\tau$ is a hyper-parameter. One piece of training data ($i$th piece of training data) may be represented as: $(u^{(i)}, \{v^{(i,1)}, .., v^{(i,j)}, ... v^{(i,n)}\}, k^{(i)})$, and $m$ is the number of pieces of the training data. u is the vector representation of the user, and is $U_d$ of the user in the embodiment of the present application, $(v^{(i,1)}, .., v^{(i,j)}, ... v^{(i,n)}\}$ is a set formed by the POIs in the query completion suggestions, and $k^{(i)}$ is the POI selected by the user in the query completion suggestions. In the embodiment of the present application, the vector v may be obtained by splicing $V_{pop}$ and $V_{per}$. $(u^{(i)}, v^{(i,k^{(i)})})$ serves as the positive example, $(u^{(i)}, v^{(i,j)})$ serves as the negative example, and $j \neq k^{(i)}$. h() is a function used by the ranking model to score the POI, and contains model parameters required to be updated in the training process of the ranking model.

The method according to the present application is described above in detail, and an apparatus according to the present application will be described below in detail in conjunction with an embodiment.

Third Embodiment

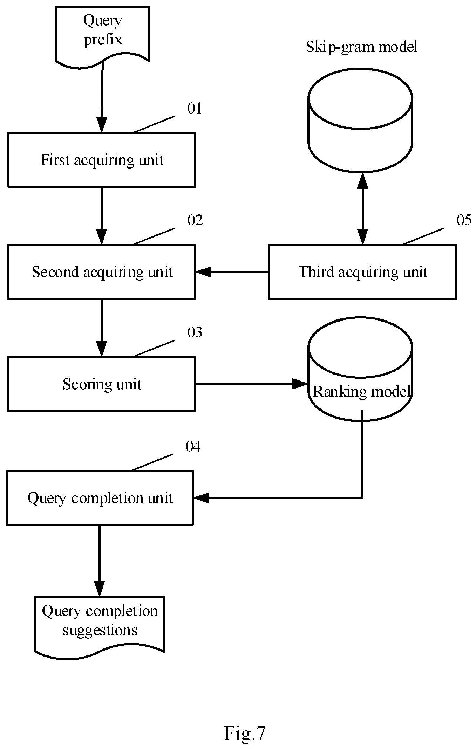

Fig. 7 is a structural diagram of a query auto-completion apparatus according to a third embodiment of the present application, and as shown in Fig. 7, the apparatus may include a first acquiring unit 01, a second acquiring unit 02, a scoring unit 03 and a query completion unit 04, and may further include a third acquiring unit 05. The main functions of each constitutional unit are as follows.

The first acquiring unit 01 is configured to acquire a query prefix input by a user currently, and determine candidate POIs corresponding to the query prefix.

The manner for determining the candidate POIs corresponding to the currently input query prefix may adopt an existing implementation manner, and aims to find POIs strongly related to the query prefix, or find POIs with the query prefix as the beginning of texts. For example, a reverse index may be established in advance for POIs in a POI library with various corresponding query prefixes. When the user inputs a query, the POI library is queried according to the query prefix input currently, and all hit POIs serve as the candidate POIs.

The second acquiring unit 02 is configured to acquire vector representation of query history information of the user and vector representation of each candidate POI.

Specifically, the second acquiring unit 02 may: acquire the query history information of the user, the query history information including POIs queried or clicked by the user in first duration and high-frequency POIs queried or clicked by the user in second duration, and the second duration being longer than the first duration; and acquire the vector representation of the query history information of the user using the vector representation of the POI.

The vector representation of each POI may be determined by the third acquiring unit 05 in advance. Specifically, the third acquiring unit 05 may acquire POI query logs of mass users, and arrange the POIs queried or clicked by the users according to a time sequence respectively to obtain POI sequences; slice each POI sequence according to the size of a preset sliding window, each slice including a central POI and contextual POIs of the central POI; train a skip-gram model using each slice; and after the training operation is finished, obtain the vector representation of each POI from the skip-gram model.

When training the skip-gram model using each slice, the third acquiring unit 05 may encode attribute information of each POI using the skip-gram model to obtain the vector representation of each POI, predict the vector representation of the contextual POIs in each slice using the vector representation of the central POI in the same slice, and iteratively update model parameters of the skip-gram model according to an error of the prediction result.

When encoding the attribute information of each POI, the third acquiring unit 05 may encode name and address information of the POI by a convolutional neural network; encode other attribute information of the POI by a feedforward neural network; and splice the encoding results of the same POI, and then map the splicing result by a fully connected layer to obtain the vector representation of the POI.

The scoring unit 03 is configured to input the vector representation of the query history information of the user and the vector representation of each candidate POI into a pre-trained ranking model, so as to obtain a score of each candidate POI.

Further, the scoring unit 03 may input vector representation of attribute features of the user and vector representation of popularity features of each candidate POI together into the ranking model, such that each candidate POI may be scored by the ranking model. For the specific processing manner, reference may be made to the related description in the first embodiment, and the specific processing manner is not repeated herein.

The query completion unit 04 is configured to determine query completion suggestions recommended to the user according to the score of each candidate POI. For example, the candidate POIs with score values greater than or equal to a preset score threshold may be used as the query completion suggestions, or the POIs with top P score values may be used as the query completion suggestions, and so on, and P is a preset positive integer. When the query completion suggestions are recommended to the user, the POIs are ranked in a candidate list according to the scores thereof. An existing drop-down box near the search box or other forms may be adopted as the recommendation way.

Fourth Embodiment

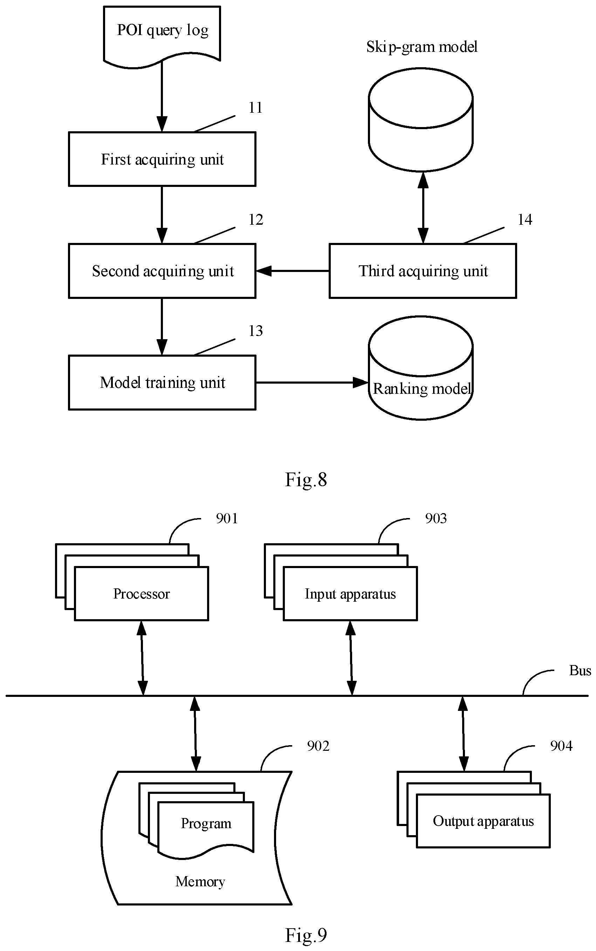

Fig. 8 is a structural diagram of an apparatus for building a ranking model according to an embodiment of the present application, and as shown in Fig. 8, the apparatus may include a first acquiring unit 11, a second acquiring unit 12 and a model training unit 13, and may further include a third acquiring unit 14. The main functions of each constitutional unit are as follows.

The first acquiring unit 11 is configured to acquire, from a POI query log, user identification, a query prefix input when a user selects a POI from query completion suggestions, POIs in the query completion suggestions corresponding to the query prefix and the POI selected by the user in the query completion suggestions.

The second acquiring unit 12 is configured to acquire vector representation of query history information of the user before the query prefix is input and vector representation of each POI in the query completion suggestions.

Specifically, the second acquiring unit 12 may: acquire the query history information of the user before the query prefix is input, the query history information including POIs queried or clicked by the user in first duration before the query prefix is input and high-frequency POIs queried or clicked in second duration, and the second duration being longer than the first duration; and obtain the vector representation of the query history information of the user before the query prefix is input using the vector representation of the POI.

The vector representation of each POI is acquired by the third acquiring unit 14 in advance. Specifically, the third acquiring unit 14 may acquire POI query logs of mass users, and arrange the POIs queried or clicked by the users according to a time sequence respectively to obtain POI sequences; slice each POI sequence according to the size of a preset sliding window, each slice including a central POI and contextual POIs of the central POI; train a skip-gram model using each slice; and after the training operation is finished, obtain the vector representation of each POI from the skip-gram model.

Specifically, when training the skip-gram model using each slice, the third acquiring unit 14 may encode attribute information of each POI using the skip-gram model to obtain the vector representation of each POI, predict the vector representation of the contextual POIs in each slice using the vector representation of the central POI in the same slice, and iteratively update model parameters of the skip-gram model according to an error of the prediction result.

When encoding the attribute information of each POI, the third acquiring unit 14 may encode name and address information of the POI by a convolutional neural network; encode other attribute information of the POI by a feedforward neural network; and splice the encoding results of the same POI, and then map the splicing result by a fully connected layer to obtain the vector representation of the POI.

The model training unit 13 is configured to train a neural network model by taking the vector representation of the query history information of the user before the query prefix is input and the vector representation of the POI selected by the user in the corresponding query completion suggestions as a positive example and the vector representation of the query history information of the user before the query prefix is input and the POIs not selected by the user in the corresponding query completion suggestions as negative examples, so as to obtain the ranking model, with a training target of maximizing the difference between scores of the positive and negative example POIs by the neural network model.

The above-mentioned positive example may further include vector representation of attribute features of the user and vector representation of popularity features of the POI selected by the user; and the negative example may further include the vector representation of the attribute features of the user and vector representation of popularity features of the POIs not selected by the user.

According to the embodiment of the present application, there are also provided an electronic device and a readable storage medium.

Fig. 9 is a block diagram of an electronic device for the query auto-completion method or the method for building a ranking model according to the embodiments of the present application. The electronic device is intended to represent various forms of digital computers, such as laptop computers, desktop computers, workstations, personal digital assistants, servers, blade servers, mainframe computers, and other appropriate computers. The electronic device may also represent various forms of mobile apparatuses, such as personal digital processors, cellular telephones, smart phones, wearable devices, and other similar computing apparatuses. The components shown herein, their connections and relationships, and their functions, are meant to be exemplary only, and are not meant to limit implementation of the present application described and/or claimed herein.

As shown in Fig. 9, the electronic device includes one or more processors 901, a memory 902, and interfaces configured to connect the components, including high-speed interfaces and low-speed interfaces. The components are interconnected using different buses and may be mounted at a common motherboard or in other manners as desired. The processor may process instructions for execution within the electronic device, including instructions stored in or at the memory to display graphical information for a GUI at an external input/output apparatus, such as a display device coupled to the interface. In other implementations, plural processors and/or plural buses may be used with plural memories, if desired. Also, plural electronic devices may be connected, with each device providing some of necessary operations (for example, as a server array, a group of blade servers, or a multi-processor system). In Fig. 9, one processor 901 is taken as an example.

The memory 902 is configured as the non-transitory computer readable storage medium according to the present application. The memory stores instructions executable by the at least one processor to cause the at least one processor to perform a query auto-completion method or a method for building a ranking model according to the present application. The non-transitory computer readable storage medium according to the present application stores computer instructions for causing a computer to perform the query auto-completion method or the method for building a ranking model according to the present application.

The memory 902 which is a non-transitory computer readable storage medium may be configured to store non-transitory software programs, non-transitory computer executable programs and modules, such as program instructions/modules corresponding to the query auto-completion method or the method for building a ranking model according to the embodiments of the present application. The processor 901 executes various functional applications and data processing of a server, that is, implements the query auto-completion method or the method for building a ranking model according to the above-mentioned embodiments, by running the non-transitory software programs, instructions, and modules stored in the memory 902.

The memory 902 may include a program storage area and a data storage area, wherein the program storage area may store an operating system and an application program required for at least one function; the data storage area may store data created according to use of the electronic device, or the like. Furthermore, the memory 902 may include a high-speed random access memory, or a non-transitory memory, such as at least one magnetic disk storage device, a flash memory device, or other non-transitory solid state storage devices. In some embodiments, optionally, the memory 902 may include memories remote from the processor 901, and such remote memories may be connected to the electronic device via a network. Examples of such a network include, but are not limited to, the Internet, intranets, local area networks, mobile communication networks, and combinations thereof.

The electronic device may further include an input apparatus 903 and an output apparatus 904. The processor 901, the memory 902, the input apparatus 903 and the output apparatus 904 may be connected by a bus or other means, and Fig. 9 takes the connection by a bus as an example.

The input apparatus 903 may receive input numeric or character information and generate key signal input related to user settings and function control of the electronic device, such as a touch screen, a keypad, a mouse, a track pad, a touch pad, a pointing stick, one or more mouse buttons, a trackball, a joystick, or the like. The output apparatus 904 may include a display device, an auxiliary lighting apparatus (for example, an LED) and a tactile feedback apparatus (for example, a vibrating motor), or the like. The display device may include, but is not limited to, a liquid crystal display (LCD), a light emitting diode (LED) display, and a plasma display. In some implementations, the display device may be a touch screen.

Various implementations of the systems and technologies described here may be implemented in digital electronic circuitry, integrated circuitry, application specific integrated circuits (ASIC), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmitting data and instructions to, a storage system, at least one input apparatus, and at least one output apparatus.

These computer programs (also known as programs, software, software applications, or codes) include machine instructions for a programmable processor, and may be implemented using high-level procedural and/or object-oriented programming languages, and/or assembly/machine languages. As used herein, the terms "machine readable medium" and "computer readable medium" refer to any computer program product, device and/or apparatus (for example, magnetic discs, optical disks, memories, programmable logic devices (PLD)) for providing machine instructions and/or data for a programmable processor, including a machine readable medium which receives machine instructions as a machine readable signal. The term "machine readable signal" refers to any signal for providing machine instructions and/or data for a programmable processor.

To provide interaction with a user, the systems and technologies described here may be implemented on a computer having: a display apparatus (for example, a cathode ray tube (CRT) or liquid crystal display (LCD) monitor) for displaying information to a user; and a keyboard and a pointing apparatus (for example, a mouse or a trackball) by which a user may provide input for the computer. Other kinds of apparatuses may also be used to provide interaction with a user; for example, feedback provided for a user may be any form of sensory feedback (for example, visual feedback, auditory feedback, or tactile feedback); and input from a user may be received in any form (including acoustic, voice or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other.

From the foregoing description, the above-mentioned method and apparatus, the device as well as the computer storage medium according to the embodiments of the present application may have the following advantages.

1) In the present application, in query automatic completion of the POI, the query history information of the user is merged into the ranking model to rank the candidate POIs, such that the query completion suggestions recommended to the user are more in line with search preference of the user.

2) In the present application, integration of the query history information of the user considers both the short-term instantaneous interest and the long-term interest preference of the user, such that the recommended query completion suggestions conform to the search preference of the user as much as possible.

3) In the present application, when the vector representation of the POI is determined, the skip-gram model is utilized, such that the vector representation of the POI is more in line with context constraints in the text meaning.

4) In the present application, when the attribute information of each POI is encoded, the POI as an aggregate of multi-source information is taken into full consideration, and information, such as the name, address, category, identification, or the like, of the POI is fused, thereby more accurately representing the POI.

It should be understood that various forms of the flows shown above may be used and reordered, and steps may be added or deleted. For example, the steps described in the present application may be executed in parallel, sequentially, or in different orders, which is not limited herein as long as the desired results of the technical solution disclosed in the present application may be achieved.

The above-mentioned implementations are not intended to limit the scope of the present application. It should be understood by those skilled in the art that various modifications, combinations, sub-combinations and substitutions may be made, depending on design requirements and other factors. Any modification, equivalent substitution and improvement made within the spirit and principle of the present application all should be included in the extent of protection of the present application.

**Claims**

1. A query auto-completion method, comprising:

   acquiring a query prefix input by a user currently, and determining candidate Points of Interest (POIs) corresponding to the query prefix;
   acquiring vector representation of query history information of the user and vector representation of each candidate POI;
   inputting the vector representation of the query history information of the user and the vector representation of each candidate POI into a pre-trained ranking model, so as to obtain a score of each candidate POI; and
   determining query completion suggestions recommended to the user according to the scores of respective candidate POIs.

2. The method according to claim 1, wherein the acquiring vector representation of query history information of the user comprises:

acquiring the query history information of the user, the query history information comprising POIs queried or clicked by the user in first duration and high-frequency POIs queried or clicked by the user in second duration, and the second duration being longer than the first duration; and
acquiring the vector representation of the query history information of the user using vector representation of the POIs.

3. The method according to claim 1 or 2, wherein the vector representation of each POI is pre-obtained by:

acquiring POI query logs of mass users, and arranging the POIs queried or clicked by the users according to a time sequence respectively to obtain POI sequences;
slicing each POI sequence according to the size of a preset sliding window, each slice comprising a central POI and contextual POIs of the central POI;
training a skip-gram model using each slice; and
after the training operation is finished, obtaining the vector representation of each POI from the skip-gram model.

4. The method according to claim 3, wherein the training a skip-gram model using each slice comprises:
encoding attribute information of each POI using the skip-gram model to obtain the vector representation of each POI, predicting the vector representation of the contextual POIs in each slice using the vector representation of the central POI in the same slice, and iteratively updating model parameters of the skip-gram model according to an error of the prediction result.

5. The method according to claim 4, wherein the encoding attribute information of each POI comprises:

encoding name and address information of the POI by the convolutional neural network;
encoding other attribute information of the POI by a feedforward neural network; and
splicing the encoding results of the same POI, and then mapping the splicing result by a fully connected layer to obtain the vector representation of the POI.

6. The method according to claim 1, wherein vector representation of attribute features of the user and vector representation of popularity features of each candidate POI are further used when each candidate POI is scored by the ranking model.

7. A method for building a ranking model for query auto-completion, comprising:

acquiring, from a POI query log, user identification, a query prefix input when a user selects a POI from query completion suggestions, POIs in the query completion suggestions corresponding to the query prefix and the POI selected by the user in the query completion suggestions;
acquiring vector representation of query history information of the user before the query prefix is input and vector representation of each POI in the query completion suggestions; and
training a neural network model by taking the vector representation of the query history information of the user before the query prefix is input and the vector representation of the POI selected by the user in the corresponding query completion suggestions as a positive example and the vector representation of the query history information of the user before the query prefix is input and the POIs not selected by the user in the corresponding query completion suggestions as negative examples, so as to obtain the ranking model, with a training target of maximizing the difference between scores of the positive and negative example POIs by the neural network model.

8. The method according to claim 7, wherein the acquiring vector representation of query history information of the user before the query prefix is input comprises:

acquiring the query history information of the user before the query prefix is input, the query history information comprising POIs queried or clicked by the user in first duration before the query prefix is input and high-frequency POIs queried or clicked in second duration, and the second duration being longer than the first duration; and

acquiring the vector representation of the query history information of the user before the query prefix is input using vector representation of the POIs.

9. The method according to claim 7 or 8, wherein the vector representation of each POI is pre-obtained by:

acquiring POI query logs of mass users, and arranging the POIs queried or clicked by the users according to a time sequence respectively to obtain POI sequences;

slicing each POI sequence according to the size of a preset sliding window, each slice comprising a central POI and contextual POIs of the central POI;

training a skip-gram model using each slice; and

after the training operation is finished, obtaining the vector representation of each POI from the skip-gram model.

10. The method according to claim 9, wherein the training a skip-gram model using each slice comprises:
encoding attribute information of each POI using the skip-gram model to obtain the vector representation of each POI, predicting the vector representation of the contextual POIs in each slice using the vector representation of the central POI in the same slice, and iteratively updating model parameters of the skip-gram model according to an error of the prediction result.

11. The method according to claim 7, wherein the positive example further comprises vector representation of attribute features of the user and vector representation of popularity features of the POI selected by the user; and
the negative example further comprises the vector representation of the attribute features of the user and vector representation of popularity features of the POIs not selected by the user.

12. A query auto-completion apparatus, comprising:

a first acquiring unit configured to acquire a query prefix input by a user currently, and determine candidate POIs corresponding to the query prefix;

a second acquiring unit configured to acquire vector representation of query history information of the user and vector representation of each candidate POI;

a scoring unit configured to input the vector representation of the query history information of the user and the vector representation of each candidate POI into a pre-trained ranking model, so as to obtain a score of each candidate POI; and

a query completion unit configured to determine query completion suggestions recommended to the user according to the scores of respective candidate POIs.

13. The apparatus according to claim 12, wherein the second acquiring unit is specifically configured to: acquire the query history information of the user, the query history information comprising POIs queried or clicked by the user in first duration and high-frequency POIs queried or clicked by the user in second duration, and the second duration being longer than the first duration; and acquire the vector representation of the query history information of the user using the vector representation of the POI.

14. The apparatus according to claim 12 or 13, wherein the apparatus further comprises a third acquiring unit configured to pre-acquire the vector representation of each POI by:

acquiring POI query logs of mass users, and arranging the POIs queried or clicked by the users according to a time sequence respectively to obtain POI sequences;

slicing each POI sequence according to the size of a preset sliding window, each slice comprising a central POI and contextual POIs of the central POI;

training a skip-gram model using each slice; and

after the training operation is finished, obtaining the vector representation of each POI from the skip-gram model.

15. The apparatus according to claim 12, wherein the scoring unit is further configured to input vector representation of attribute features of the user and vector representation of popularity features of each candidate POI into the ranking model, such that each candidate POI is scored by the ranking model.

16. An apparatus for building a ranking model for query auto-completion, comprising:

a first acquiring unit configured to acquire, from a POI query log, user identification, a query prefix input when a user selects a POI from query completion suggestions, POIs in the query completion suggestions corresponding to the query prefix and the POI selected by the user in the query completion suggestions;

a second acquiring unit configured to acquire vector representation of query history information of the user before the query prefix is input and vector representation of each POI in the query completion suggestions; and

a model training unit configured to train a neural network model by taking the vector representation of the query history information of the user before the query prefix is input and the vector representation of the POI selected by the user in the corresponding query completion suggestions as a positive example and the vector representation of the query history information of the user before the query prefix is input and the POIs not selected by the user in the corresponding query completion suggestions as negative examples, so as to obtain the ranking model, with a training target of maximizing the difference between scores of the positive and negative example POIs by the neural network model.

17. The apparatus according to claim 16, wherein

the second acquiring unit is specifically configured to: acquire the query history information of the user before the query prefix is input, the query history information comprising POIs queried or clicked by the user in first duration before the query prefix is input and high-frequency POIs queried or clicked in second duration, and the second duration being longer than the first duration; and obtain the vector representation of the query history information of the user before the query prefix is input using the vector representation of the POI.

18. The apparatus according to claim 16 or 17, wherein the apparatus further comprises:
a third acquiring unit configured to pre-acquire the vector representation of each POI by:

acquiring POI query logs of mass users, and arranging the POIs queried or clicked by the users according to a time sequence respectively to obtain POI sequences;

slicing each POI sequence according to the size of a preset sliding window, each slice comprising a central POI and contextual POIs of the central POI;

training a skip-gram model using each slice; and

after the training operation is finished, obtaining the vector representation of each POI from the skip-gram model.

19. An electronic device, comprising:

at least one processor;

a memory connected with the at least one processor communicatively;

wherein the memory stores instructions executable by the at least one processor to enable the at least one processor to perform the method according to any one of claims 1 to 11.

20. A non-transitory computer readable storage medium with computer instructions stored thereon, wherein the computer instructions are used for causing a computer to perform the method according to any one of claims 1 to 11.

EP 3 879 416 A1

Fig.1

16

Fig.2

Acquire a query prefix input by a user currently, and determine candidate POIs corresponding to the query prefix  — 301

Acquire vector representation of query history information of the user and vector representation of each candidate POI  — 302

Input vector representation of query history information of user and vector representation of each candidate POI into a pre-trained ranking model, so as to obtain a score of each candidate POI  — 303

Determine query completion suggestions recommended to the user according to the scores of respective candidate POIs  — 304

Fig.3

401

Acquire POI query logs of mass users, and arrange the POIs queried or clicked by the users according to a time sequence respectively to obtain POI sequences

402

Slice each POI sequence according to the size of a preset sliding window, each slice including a central POI and contextual POIs of the central POI

403

Train a skip-gram model using each slice

404

After the training operation is finished, obtain the vector representation of each POI from the skip-gram model

Fig.4

Score of
candidate POI

Ranking model

$V_{per}$

FC( $U_{per} \cdot e_{w2v}$ )

$e_{w2v}$           $U_{per}$           $U_a$           $V_{pop}$

| Encoding | Encoding | Encoding | Encoding |

Candidate
POI

User query
history
information

User attribute
information

Popularity of
candidate POI

Fig.5

601

Acquire, from a POI query log, user identification, a query prefix input when a user selects a POI from query completion suggestions, POIs in the query completion suggestions corresponding to the query prefix and the POI selected by the user in the query completion suggestions

602

Acquire vector representation of query history information of the user before the query prefix is input and vector representation of each POI in the query completion suggestions

603

Train a neural network model by taking the vector representation of the query history information of the user before the query prefix is input and the vector representation of the POI selected by the user in the corresponding query completion suggestions as a positive example and the vector representation of the query history information of the user before the query prefix is input and the POIs not selected by the user in the corresponding query completion suggestions as negative examples, so as to obtain the ranking model

Fig.6

Query
prefix

Skip-gram model

First acquiring unit — 01

Second acquiring unit — 02

Third acquiring unit — 05

Scoring unit — 03

Ranking model

Query completion unit — 04

Query completion
suggestions

Fig.7

Fig.8

Fig.9

## INTERNATIONAL SEARCH REPORT

| International application No. |
|---|
| **PCT/CN2020/116632** |

### A. CLASSIFICATION OF SUBJECT MATTER

G06F 16/9537(2019.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 查询, 检索, 搜索, 关键词, 自动, 补全, 补齐, 推荐, 历史, 个性化, 导航, 兴趣点, 信息点, 向量, 模型, 神经网络, 正, 负, 反, query, search, keyword, auto, complet+, recommendation, history, personalization, navigation, interest 1d point, POI, vector, model, neural w network, positive, negative

### C. DOCUMENTS CONSIDERED TO BE RELEVANT

| Category* | Citation of document, with indication, where appropriate, of the relevant passages | Relevant to claim No. |
|---|---|---|
| PX | CN 111222058 A (BAIDU ONLINE NETWORK TECHNOLOGY (BEIJING) CO., LTD.) 02 June 2020 (2020-06-02)<br>claims 1-20 | 1-20 |
| PX | CN 111241427 A (BAIDU ONLINE NETWORK TECHNOLOGY (BEIJING) CO., LTD.) 05 June 2020 (2020-06-05)<br>claims 1-18 | 1-20 |
| Y | CN 110046298 A (NATIONAL UNIVERSITY OF DEFENSE TECHNOLOGY OF PLA) 23 July 2019 (2019-07-23)<br>description, paragraphs [0018]-[0019], [0031]-[0059], [0084] | 1-20 |
| Y | CN 107862004 A (IFLYTEK CO., LTD.) 30 March 2018 (2018-03-30)<br>description, paragraphs [0086]-[0126] and [0169]-[0175] | 1-20 |
| Y | CN 104462369 A (SHENYANG MXNAVI TECHNOLOGY CO., LTD.) 25 March 2015 (2015-03-25)<br>description, paragraphs [0040]-[0069] | 1-20 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 December 2020** | **21 December 2020** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT

| | International application No. |
|---|---|
| | **PCT/CN2020/116632** |

**C.     DOCUMENTS CONSIDERED TO BE RELEVANT**

| Category* | Citation of document, with indication, where appropriate, of the relevant passages | Relevant to claim No. |
|---|---|---|
| A | US 2014358879 A1 (INTERNAL BUSINESS MACHINES CORPORATION) 04 December 2014 (2014-12-04)<br>entire document | 1-20 |
| A | CN 107832404 A (WUHAN UNIVERSITY) 23 March 2018 (2018-03-23)<br>entire document | 1-20 |

Form PCT/ISA/210 (second sheet) (January 2015)

**INTERNATIONAL SEARCH REPORT**
Information on patent family members

International application No.

**PCT/CN2020/116632**

| Patent document cited in search report | | | Publication date (day/month/year) | Patent family member(s) | | | Publication date (day/month/year) |
|---|---|---|---|---|---|---|---|
| CN | 111222058 | A | 02 June 2020 | None | | | |
| CN | 111241427 | A | 05 June 2020 | None | | | |
| CN | 110046298 | A | 23 July 2019 | None | | | |
| CN | 107862004 | A | 30 March 2018 | None | | | |
| CN | 104462369 | A | 25 March 2015 | None | | | |
| US | 2014358879 | A1 | 04 December 2014 | CN | 103455507 | A | 18 December 2013 |
| CN | 107832404 | A | 23 March 2018 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2020100104792